# EUROPEAN PATENT APPLICATION

(11) **EP 2 854 046 A2**
(43) Date of publication of application: **01.04.2015**
(21) Application number: 14177883.7
(22) Date of filing: 21.07.2014
(51) Int. Cl.: G06F 17/24

(54) **Paper medium, input device, and a non-transitory computer-readable medium for input device**

(30) Priority: 25.07.2013 JP 2013154927
(71) Applicant: Brother Kogyo Kabushiki Kaisha, Nagoya, Aichi 467-8561 (JP)
(72) Inventor: Iriyama, Yasuhiro, Nagoya, Aichi 467-8562 (JP); Tanjima, Naoki, Nagoya, Aichi 467-8562 (JP); Inaba, Takehiko, Nagoya, Aichi 467-8562 (JP)
(74) Representative: Smith, Samuel Leonard

(57) **Abstract**

A form 111 is provided with a check box 40. The check box 40 is disposed in a position that corresponds to a form information item that is specified information that is related to the form 111. The position of a check box 424 corresponds to the form information item "April". The position of a check box 413 corresponds to the form information item "Week 3". In a case where the form information items are the same in every one of a plurality of the forms 111, information correspondence positions are the same positions in every one of the plurality of the forms 111. In a case where the form information items are different in every one of a plurality of the forms 111, the information correspondence positions are different positions in every one of the plurality of the forms 111.

## Description

### BACKGROUND

The present invention relates to a paper medium, to an input device that is able to convert the path of a writing instrument on the paper medium into electronic data, and to a non-transitory computer-readable medium for an input device.

An input device is known that, in a case where writing has been done on a paper medium that has been placed on a base, converts the path of the movement of the writing instrument into information, in electronic form, on a linear figure that has been written on the paper medium. For example, a writing input device that is described in Japanese Laid-Open Patent Publication No. 2001-147771 is provided with a handwriting input portion and a code reader. A user places a paper medium on a stage of the handwriting input portion. A bar code is printed on the paper medium. The bar code indicates information that is related to the paper medium, such as a document name, a page number, a personal computer name, a personal computer IP address, and the like, for example. The bar code is read by the code reader. When the user writes on the paper medium using an electromagnetic pen, the coordinates of the positions where the writing was done on the paper medium are detected by the handwriting input portion. Revision data that indicate the detected writing positions are appended to document data for the page number that is indicated by the bar code. Note that a two-dimensional code can be used instead of the bar code. The bar code expresses information through slight differences in the thicknesses of the lines in the bar pattern. The two-dimensional code expresses information by arranging small dots vertically and horizontally. That is, both the bar code and the two-dimensional code express information through differences in a pattern.

### SUMMARY

However, with both the bar code and the two-dimensional code, the information is read by a device, and the differences in the patterns (the differences in the thicknesses of the lines and the positions of the dots) cannot be easily discerned by a human being. Accordingly, it is difficult for a person to recognize the information that a bar code or a two-dimensional code indicates about the paper medium, even if the person looks directly at the bar code or two-dimensional code.

Embodiments of the broad principles derived herein provide a paper medium, an input device that make it possible for a person to recognize information about the paper medium by looking directly at the paper medium, and a non-transitory computer-readable medium for an input device.

Embodiments provide a paper medium that includes a form and a mark. The mark is disposed on the form in an information correspondence position. The information correspondence position is a specified position that corresponds to a form information item. The information correspondence position is the same position on each one of a plurality of forms in a case where the form information item is the same on each one of the plurality of the forms. The information correspondence position is a different position on each one of a plurality of the forms in a case where the form information item is different on each one of the plurality of the forms. The form information item is specified information that is related to the form. With the paper medium that is described above, the form information item is shown by the mark that is provided in the specified position on the paper medium. Therefore, a user is able to recognize the form information item simply by looking at the position of the mark on the paper medium. Moreover, in the case where the form information item is the same on every one of the plurality of the forms, the information correspondence position is the same position on every one of the plurality of the forms. Furthermore, in the case where the form information item is different on every one of the plurality of the forms, the information correspondence position is different on every one of the plurality of the forms. Therefore, if the user memorizes the position of the mark that corresponds to the form information item, for example, the user can recognize the form information item simply by looking at marks that are in the same position on every one of the plurality of the forms. Accordingly, the number of the mark positions that the user needs to remember can be reduced from what it would be in a case where, even though the form information item is the same on every one of the plurality of the forms, the positions of the marks are different on every one of the plurality of the forms, that is, a case where the mark that corresponds to a particular form information item is provided in a plurality of different positions. Accordingly, the burden on the user of memorizing the mark positions can be reduced.

In the paper medium, the mark may be disposed on the form in the information correspondence position corresponding to the form information item that is related to the form. And no pattern having a same shape as the mark is disposed in another information correspondence position corresponding to another form information item that is different from the form information item. Accordingly, the possibility that the user will recognize the form information item incorrectly can be reduced from what it would be in a case where a pattern that has the same shape as the mark is provided in an information correspondence position that corresponds to a different form information item. The possibility that the user will mistakenly enter a check mark at an information correspondence position that corresponds to the different form information item can also be reduced.

In the paper medium, the mark may be a check box. The check box prompts the user to enter a check mark. Therefore, the check box draws the user's attention more readily than would happen in a case where a dot (•) or the like, for example, is provided instead of the check box in the specified position that corresponds to the form information item. Accordingly, the user can quickly confirm the positions of the check box. The user is therefore able to recognize the form information item efficiently, based on the position of the check box.

In the paper medium, the mark may be a character string that indicates content that is related to the form information item. In this case, the mark itself indicates content that is related to the form information item, so the user is easily able to determine the form information item.

In the paper medium, the form may include two facing pages, and the mark that is disposed in the information correspondence position for the form including the two facing pages is disposed on one of the pages of the form including the two facing pages. In this case, the form information item for the two facing pages is shown in the position of the mark that is disposed on one of the pages. Accordingly, the number of the mark positions that the user is required to remember is less than the number of pages. Accordingly, the burden on the user of memorizing the mark positions can be reduced.

Embodiments also provide an input device that includes position acquisition means, storage means, and specification means. The position acquisition means acquires a position where writing has been performed on a form by writing means. The position has been detected by detection means that is provided in placement means on which is placed the paper medium described above. The storage means stores correspondence information that is information in which a form information item is associated with a mark correspondence position. The mark correspondence position is a position on the placement means that corresponds to the information correspondence position. The specification means specifies the form information item that is associated with the mark correspondence position, by referring to the correspondence information that is stored in the storage means, in a case where the position that has been detected by the detection means is the mark correspondence position.

Embodiments also provide a non-transitory computer-readable medium that stores a control program that is executable on an input device, the program including computer-readable instructions that, when executed, cause the input device to perform steps that include acquiring a position where writing has been performed on a form by writing means. The position has been detected by detection means. The detection means is provided in placement means on which a paper medium is placed. The paper medium includes the form and a mark disposed on the form in an information correspondence position. The information correspondence position is a specified position corresponding to a form information item. The information correspondence position is the same position on each one of a plurality of the forms in a case where the form information item is the same on each one of the plurality of the forms. The information correspondence position is a different position on each one of a plurality of the forms in a case where the form information item is different on each one of the plurality of the forms. The form information item is specified information that is related to the form. The writing means is an instrument that performs writing on the form. The steps also include specifying, by referring to correspondence information, in a case where the detected position is a mark correspondence position, the form information item that is associated with the mark correspondence position. The correspondence information is information in which the form information item is associated with the mark correspondence position. The mark correspondence position is a position on the placement means that corresponds to the information correspondence position. In these cases, the input device is enabled to specify the form information item by the user's using of an electronic pen to designate the mark position on the paper medium.

### BRIEF DESCRIPTION OF THE DRAWINGS

Embodiments will be described below in detail with reference to the accompanying drawings in which:
FIG. 1 is a figure that shows an overview of a handwriting input system 1;
FIG. 2 is a plan view of a reading device 2;
FIG. 3 is a block diagram that shows an electrical configuration of the reading device 2 and a PC 19;
FIG. 4 is a figure that shows a form 121;
FIG. 5 is a figure that shows positions of check boxes 40 that can be provided on a form 111;
FIG. 6 is a figure that shows a form 122;
FIG. 7 is a figure that shows a form 123;
FIG. 8 is a data configuration diagram for a correspondence data table 95;
FIG. 9 is a flowchart of main processing;
FIG. 10 is a figure that shows a state in which writing has been done on the form 121 in FIG. 4;
FIG. 11 is a figure that shows an example of a screen that is displayed on a display 192;
FIG. 12 is a figure that shows a form 125;
FIG. 13 is a figure that shows a form 130; and
FIG. 14 is a figure that shows a form 135.

### DETAILED DESCRIPTION

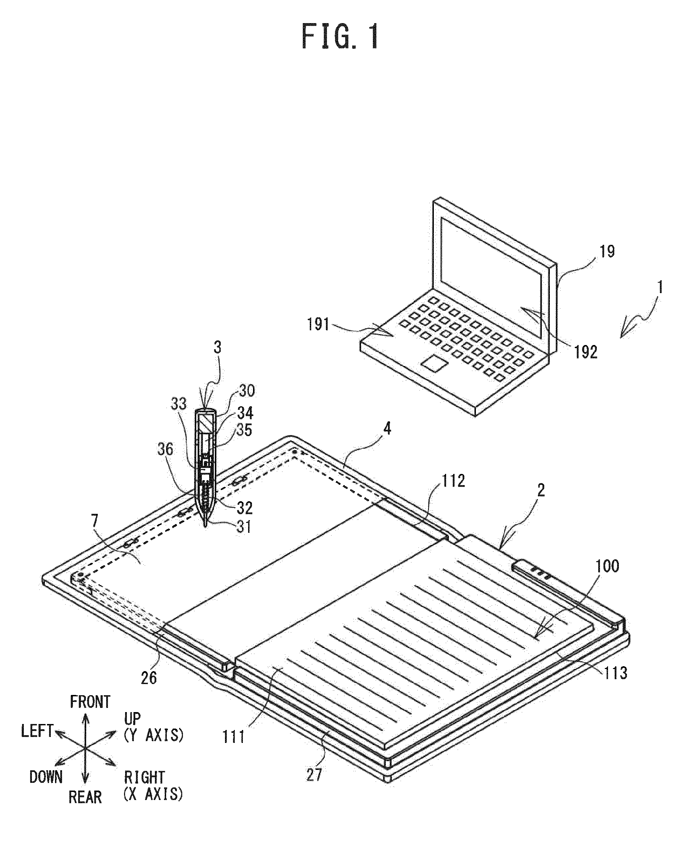

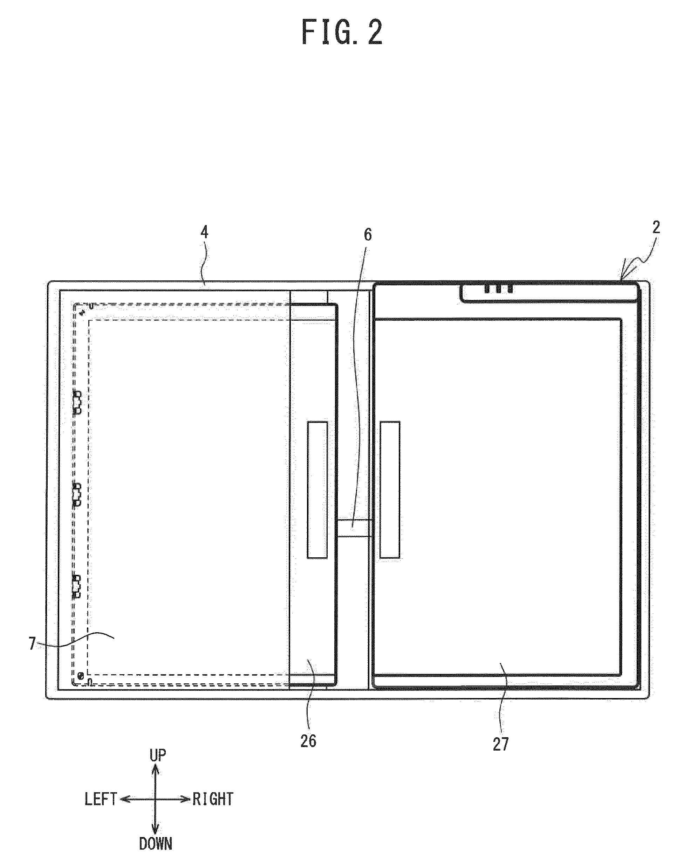

Hereinafter, an embodiment of the present invention will be explained with reference to the drawings. Note that the drawings are used for explaining technological features that the present invention can utilize, and they are not drawings whose purpose is to restrict the content of the present invention. An overview of a handwriting input system 1 according to the present embodiment will be explained with reference to FIGS. 1 and 2. In the explanation that follows, the upper left side, the lower right side, the top side, the bottom side, the upper right side, and the lower left side in FIG. 1 will be explained as respectively defining the left side, the right side, the front side, the rear side, the top side, and the bottom side of a reading device 2. The left-right axis and the front-rear axis of the reading device 2 will be explained as respectively defining an X axis and a Y axis.

As shown in FIG. 1, the handwriting input system 1 is mainly provided with the reading device 2, an electronic pen 3, a PC 19, and the like. The reading device 2 is a thin, lightweight handwriting input device that can be folded up and carried. In the handwriting input system 1, a user uses the electronic pen 3 to write a linear figure on a form 111 of a paper medium 100 that is fixed in place on the reading device 2. The linear figure may be any one of a text character, a numeric character, a symbol, a pictorial figure, and the like. The reading device 2 detects the position of the electronic pen 3. Based on a plurality of the positions of the electronic pen 3 that have been detected over time, the reading device 2 specifies the path of the electronic pen 3. Based on data about the path of the electronic pen 3 that has been specified by the reading device 2, the PC 19 creates and stores an image file in which the linear figure that has been written on the form 111 is converted into electronic form. Hereinafter, the data about the path of the electronic pen 3 that has been specified by the reading device 2 will be called the stroke data.

As shown in FIG. 2, the reading device 2 is mainly configured from a left reading device 26 and a right reading device 27 that form a left-right pair, a flat cable 6, and a cover 4. The left reading device 26 and the right reading device 27 are shaped as thin rectangular plates, and they are disposed such that they can form left and right facing pages on the front face of the cover 4. The left reading device 26 and the right reading device 27 are electrically connected by the flat cable 6. The cover 4 is provided with a pouch portion 7 on its left side. The left reading device 26 is removably mounted in the cover 4 by being inserted into the pouch portion 7. The right reading device 27 is affixed to the right front face of the cover 4 by double-sided tape, an adhesive resin film, or the like.

The paper medium 100 is removably mounted on the front face of the reading device 2. As shown in FIG. 1, the paper medium 100 has a booklet shape that can be opened into left and right facing pages. In the paper medium 100, a pair of covers (a front cover 112 and a back cover 113) and a plurality of the forms 111 are bound along portions of their respective edges. For example, the paper medium 100 may be an A5 size notebook. A format that indicates the layout and the like of a preprinted pattern on the form 111 may differ according to the type of the paper medium 100 or according to the page of the form 111. The paper medium 100 is mounted on the reading device 2 such that the front cover 112 is placed on the top face of the left reading device 26 and the back cover 113 is placed on the top face of the right reading device 27. In the present embodiment, the paper medium 100 is mounted in a state in which its position on the reading device 2 is fixed by double-sided tape, an adhesive resin film, or the like. The user can use the electronic pen 3 to write a linear figure on the form 111 of the paper medium 100.

The electronic pen 3 is a known electromagnetic induction type of electronic pen and is mainly provided with a cylindrical body 30, a core 31, a coil 32, a variable capacitance capacitor 33, a circuit board 34, a capacitor 35, and an ink storage portion 36. The cylindrical body 30 has a circular cylindrical shape, and it contains in its interior a portion of the core 31, the coil 32, the variable capacitance capacitor 33, the circuit board 34, the capacitor 35, and the ink storage portion 36. The core 31 is provided in the tip portion of the electronic pen 3 (the lower end in FIG. 1). The core 31 is energized toward the tip of the electronic pen 3 by an elastic member that is not shown in the drawings. The tip portion of the core 31 protrudes to the outside of the cylindrical body 30. The back end of the core 31 (the upper end in FIG. 1) is connected to the ink storage portion 36, within which ink is stored. The ink storage portion 36 supplies the ink to the core 31. When the user uses the electronic pen 3 to write on the form 111, a linear figure is formed by the ink on the form 111.

The coil 32 is held between the core 31 and the variable capacitance capacitor 33 in a state in which it is wound around the ink storage portion 36. The variable capacitance capacitor 33 is fixed in place in the interior of the electronic pen 3 by the circuit board 34. The capacitor 35 is carried on the circuit board 34. The capacitor 35 and the variable capacitance capacitor 33 are connected in parallel with the coil 32 to configure a known resonance (synchronization) circuit.

The PC 19 is a general-purpose notebook type of personal computer. The PC 19 is provided with an input portion 191 and a display 192. The input portion 191 is used for inputting various types of commands. The display 192 displays an image. In the handwriting input system 1, a known information terminal (a tablet PC, a smart phone, or the like) may also be used as the PC 19 instead of the personal computer.

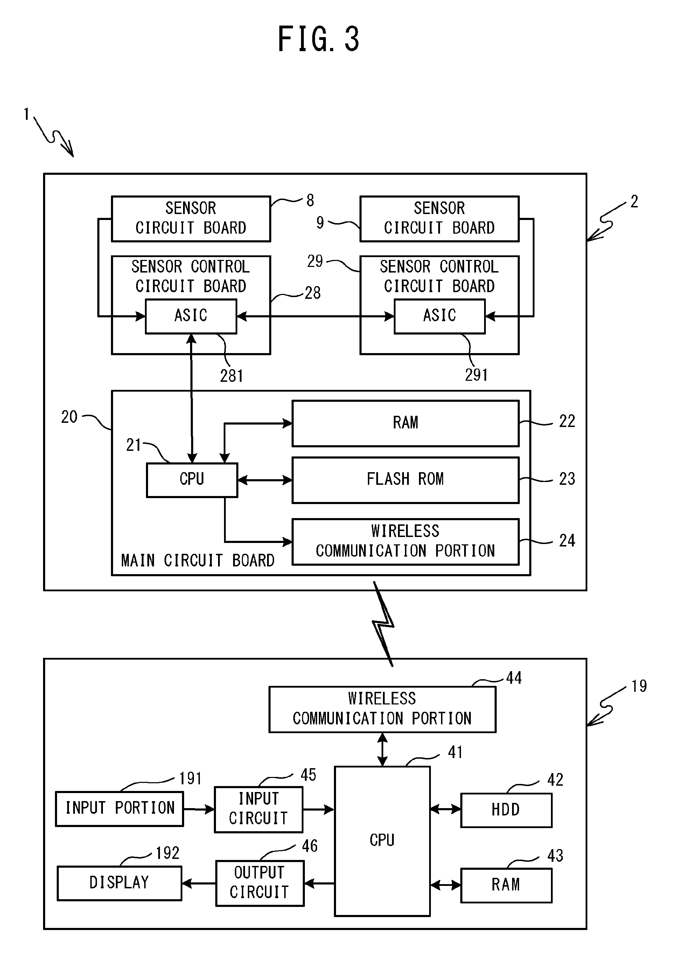

An electrical configuration of the handwriting input system 1 will be explained with reference to FIG. 3. An electrical configuration of the reading device 2 and an overview of the principles by which the reading device 2 acquires the stroke data will be explained first. The reading device 2 is provided with sensor circuit boards 8, 9, a main circuit board 20, and sensor control circuit boards 28, 29. The sensor circuit boards 8, 9 are provided inside the left reading device 26 and the right reading device 27, respectively.

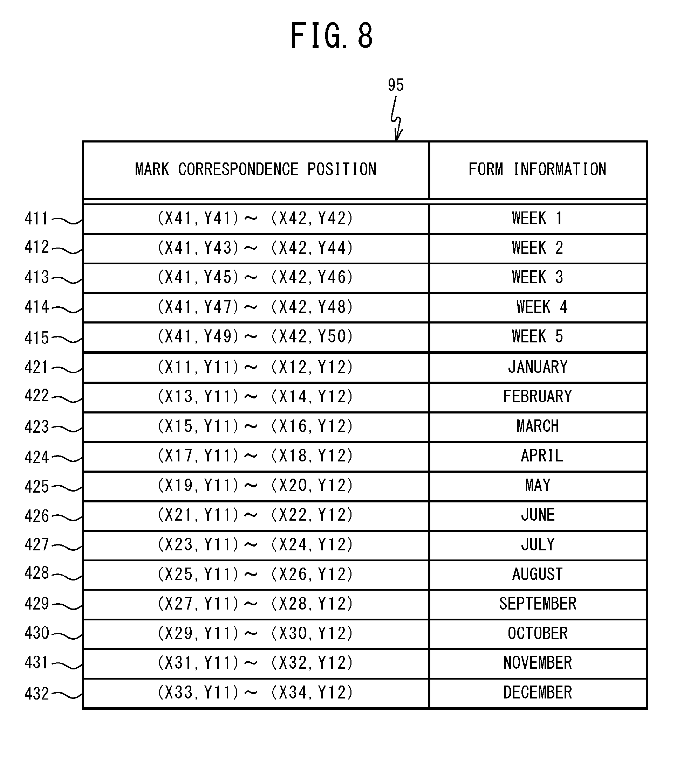

The main circuit board 20 is provided with a CPU 21, a RAM 22, a flash ROM 23, and a wireless communication portion 24. The RAM 22, the flash ROM 23, and the wireless communication portion 24 are electrically connected to the CPU 21. The CPU 21 performs control of the reading device 2. The RAM 22 temporarily stores various types of data such as computation data and the like. Various types of programs that the CPU 21 executes to control the reading device 2 are stored in the flash ROM 23, as is a correspondence data table 95 (refer to FIG. 8). The stroke data and the like are also stored in flash ROM 23. The wireless communication portion 24 is a controller for performing near field communication with an external electronic device.

In each one of the sensor circuit boards 8, 9, a plurality of long, thin loop coils are arrayed along both an X axis and a Y axis. The sensor circuit board 8 is electrically connected to an ASIC 281 of the sensor control circuit board 28. In a case where a writing operation is performed by the electronic pen 3 on the sensor circuit board 8, the ASIC 281 performs processing that creates the stroke data based on the writing operation. The sensor circuit board 9 is electrically connected to an ASIC 291 of the sensor control circuit board 29. In a case where a writing operation is performed by the electronic pen 3 on the sensor circuit board 9, the ASIC 291 performs processing that creates the stroke data based on the writing operation. Between the ASIC 281 and the ASIC 291, the ASIC 281 is the master and is connected directly to the CPU 21, while the ASIC 291 is the slave and is connected to the CPU 21 through the ASIC 281.

The principles by which the stroke data are acquired in a case where a writing operation is performed by the electronic pen 3 on the sensor circuit boards 8, 9 will be explained in general terms. The CPU 21 controls the ASICs 281, 291 such that they cause an electric current of a specific frequency (a sending current for excitation) to flow through each of the loop coils in the corresponding one of the sensor circuit boards 8, 9 one at a time. This causes a magnetic field to be generated by each one of the loop coils in the sensor circuit boards 8, 9. With this state in existence, if the user uses the electronic pen 3 to perform an operation of writing a linear figure on the form 111 of the paper medium 100 that is fixed in place in the reading device 2, the electronic pen 3 will come close to the sensor circuit boards 8, 9. The resonance circuit of the electronic pen 3 therefore resonates due to electromagnetic induction and generates an induced magnetic field.

Next, the CPU 21 controls the ASICs 281, 291 such that they stop the generating of the magnetic fields by the individual loop coils in the sensor circuit boards 8, 9. Each one of the loop coils in the sensor circuit boards 8, 9 receives the induced magnetic field that is generated by the resonance circuit of the electronic pen 3. The CPU 21 controls the ASICs 281, 291 such that they detect signal currents (received currents) that flow through the individual loop coils in the sensor circuit boards 8, 9. By performing this operation for all of the loop coils one at a time, the ASICs 281, 291 detect the position of the electronic pen 3 in the form of coordinate information, based on the received currents.

In a state in which a linear figure is being written on the form 111 using the electronic pen 3, a writing pressure is imparted to the core 31. The inductance in the coil 32 varies according to the writing pressure that is imparted to the core 31. This causes the resonance frequency of the resonance circuit of the electronic pen 3 to vary in accordance with the writing pressure that is imparted to the core 31. The CPU 21 detects the changes (phase changes) in the resonance frequency and specifies the writing pressure that is imparted to the core 31. In other words, the CPU 21 is able to determine, according to the specified writing pressure, whether a state exists in which a linear figure is being written on the form 111 of the paper medium 100. In a case where the CPU 21 has determined that a linear figure is being written on the form 111, the CPU 21 acquires the stroke data that indicate the path of the electronic pen 3 and stores the stroke data in the flash ROM 23. The stroke data include information on a plurality of sets of coordinates that indicate a plurality of positions on the path of the electronic pen 3.

Next, an electrical configuration of the PC 19 and an overview of processing in a case where the PC 19 has acquired the stroke data from the reading device 2 will be explained. The PC 19 is mainly provided with a CPU 41, a hard disk drive (HDD) 42, a RAM 43, a wireless communication portion 44, an input circuit 45, an output circuit 46, the input portion 191, and the display 192. The CPU 41 performs control of the PC 19. The CPU 41 is electrically connected to the HDD 42, the RAM 43, the wireless communication portion 44, the input circuit 45, and the output circuit 46. Various types of programs that the CPU 41 executes are stored in the HDD 42.

The PC 19 is provided with media reading device (for example, a CD-ROM drive) that is not shown in the drawings. The PC 19 is able to read a program that is stored in a storage medium (for example, a CD-ROM) with the media reading device and to install the program on the HDD 42. The PC 19 may also receive a program from an external device (not shown in the drawings) that is connected to the PC 19, or from a network, and then install the program on the HDD 42.

The RAM 43 stores various types of data temporarily. The wireless communication portion 44 is a controller for performing near field communication with an external electronic device. The input circuit 45 performs control that sends commands to the CPU 41 from the input portion 191 (for example, a mouse, a keyboard, a touch panel, or the like). The output circuit 46 performs control that displays an image on the display 192 in response to a command from the CPU 41.

In a case where a command to acquire the stroke data from the reading device 2 has been input by the user, the CPU 41 performs near field communication with the reading device 2 through the wireless communication portion 44. The stroke data that are stored in the flash ROM 23 of the reading device 2 are transmitted from the reading device 2 to the PC 19. The CPU 41 takes the stroke data that have been transmitted from the reading device 2 and stores them in one of the RAM 43 and the HDD 42. Note that the communication by which the stroke data are transmitted from the reading device 2 to the PC 19 is not limited to being wireless communication, and it may also be wired communication.

The CPU 41 is able to specify a character string based on the stroke data that are stored in one of the RAM 43 and the HDD 42. In this case, the CPU 41 performs optical character recognition (OCR) processing. The character string includes text characters, numeric characters, symbols, pictorial figures, and the like, which are indicated by character codes that the PC 19 can recognize. Cases that occur include not only cases in which pluralities of text characters, numeric characters, symbols, pictorial figures, and the like are specified, but also cases in which only one text character, numeric character, symbol, pictorial figure, or the like is specified. The CPU 41 first creates image data that show the path that is indicated by the stroke data, then specifies the character string by performing the OCR processing on the image data it has created. Note that the method for specifying the character string can be modified. For example, the CPU 41 may also specify the character string directly from the stroke data by using a known pattern matching technology.

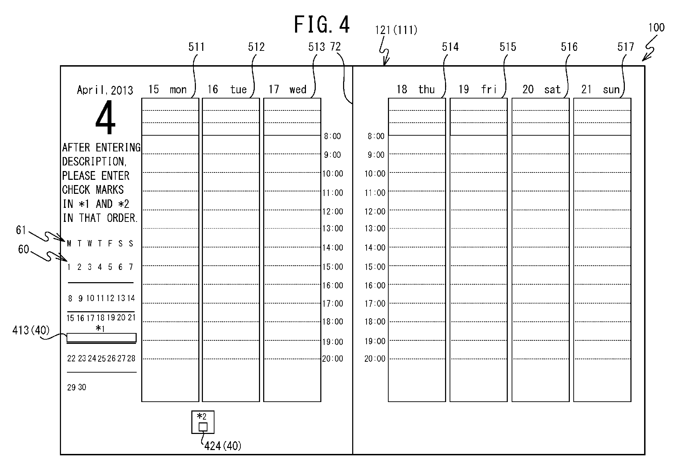

Forms 121 to 123, which are specific examples of the form 111, will be explained with reference to FIGS. 4 to 7. The bottom side, the top side, the left side, and the right side in FIGS. 4 to 7 will be explained as respectively defining the bottom side, the top side, the left side, and the right side of the form 111. Note that the forms 121 to 123 are each double-page forms of the form 111, and they can be folded into a closed state along a boundary line 72 between the two pages.

The form 121 will be explained with reference to FIG. 4. The form 121 is an example of the form 111 with a one-week format, and it is a form for managing plans for the third week in April. The character "4" is written in the upper left portion of the form 121 to indicate that the month is April. Seven boxes 511 to 517, whose longer axes are parallel to the vertical, are provided in order from the left side to the right side of the form 123. Character strings from "15 Mon" to "21 Sun" are written at the upper ends of the corresponding boxes 511 to 517 to indicate the dates and the days of the week. The top-to-bottom direction in the boxes 511 to 517 corresponds to the flow of time throughout the day. The character strings "8:00" to "20:00" are written from top to bottom in the center margins of the form 121 to indicate the hours of the day. The user writes plans and the like in the positions for the corresponding hours in the boxes 511 to 517.

A check box 424 is provided below the left edge of the box 512. "*2" is written in the upper portion of the check box 424. To the left of the box 511, numeric characters 60 "1" to "30" are written to indicate the dates in April, and alphabetic characters 61 "M", "T", "W", "T", "F", "S", and "S" are written to indicate the days of the week. The alphabetic characters 61 "M", "T", "W", "T", "F", "S", and "S" are the initials for the days from Monday to Sunday. A check box 413 is provided below the numeric characters "15" to "21", among the numeric characters 60, that indicate the third week in April. "*1" is written between the check box 413 and the numeric characters "15" to "21" that indicate the third week in April. The text "After entering description, please enter check marks in *1 and *2 in that order" is written above the alphabetic characters 61.

The check boxes 413, 424 are provided in specified positions (hereinafter called the information correspondence positions) that correspond to form information items. The form information items are specified information items that are related to the form 121. The form information item that indicates the information correspondence position where the check box 424 is located is "April". The form information item that indicates the information correspondence position where the check box 413 is located is "Week 3".

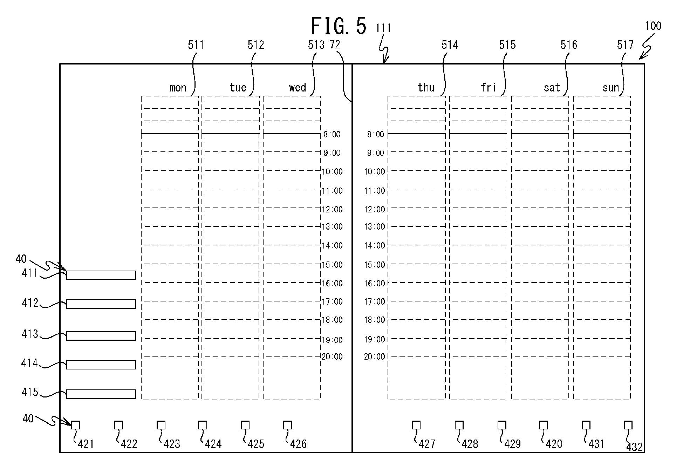

The information correspondence positions will be explained in greater detail. In the explanation that follows, in a case where the check boxes 413, 424 are referenced collectively, they will be called the check boxes 40, and in a case where a specific check box is not indicated, it will be called the check box 40. FIG. 5 shows the positions of the check boxes 40 (that is, the information correspondence positions) that can be provided on the form 111 in a case where the form 111 has a one-week format. Check boxes 411 to 415 and 421 to 432 are located in the information correspondence positions on the form 111. The form information items that the positions of the check boxes 421 to 432 show are "January" to "December", respectively. The form information items that the positions of the check boxes 411 to 415 show are "Week 1" to "Week 5", respectively. The check boxes 421 to 432 are arranged in order from left to right along the lower edge of the form 111. The check boxes 411 to 415 are arranged in order from a highest position to a lowest position along the left edge of the form 111.

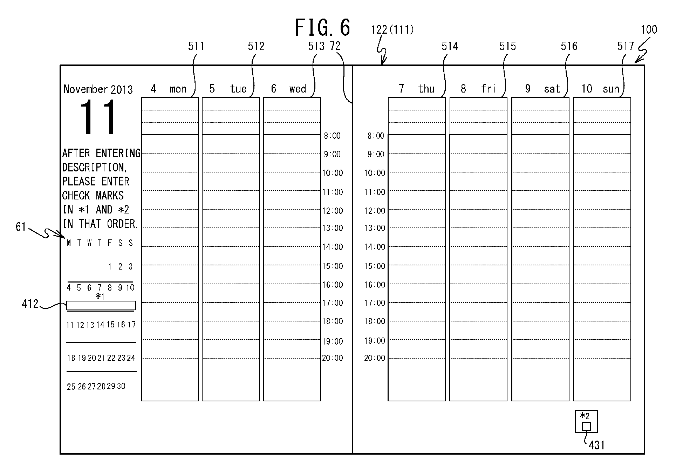

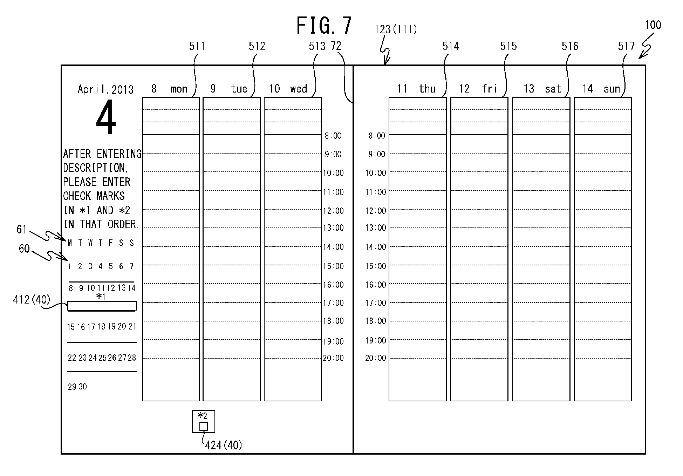

In the case of the form 121 for the third week of April, for example, among the check boxes 40 in FIG. 5, the check box 424 that shows the form information item "April" and the check box 413 that shows the form information item "Week 3" are provided, while the rest of the check boxes 40 are not provided (refer to FIG. 4). Further, in the case of the form 122, for the second week of November in FIG. 6, among the check boxes 40 in FIG. 5, the check box 431 that shows the form information item "November" and the check box 412 that shows the form information item "Week 2" are provided, while the rest of the check boxes 40 are not provided. Further, in the case of the form 123, for the second week of April in FIG. 7, the check box 424 that shows the form information item "April" and the check box 412 that shows the form information item "Week 2" are provided, while the rest of the check boxes 40 are not provided.

In the present embodiment, in a case where the form information items are the same on every one of a plurality of the forms 111, the information correspondence positions are the same positions on every one of the plurality of the forms 111. Therefore, in a case where the form information item is the same "April", as on the form 121 (refer to FIG. 4) and the form 123 (refer to FIG. 7), the position of the check box 424 on the form 121 is the same as the position of the check box 424 on the form 123. In the same manner, in a case where the form information item is the same "Week 2", as on the form 122 (refer to FIG. 6) and the form 123 (refer to FIG. 7), the position of the check box 412 on the form 122 is the same as the position of the check box 412 on the form 123.

Furthermore, in the present embodiment, in a case where the form information items are different on every one of a plurality of the forms 111, the information correspondence positions are different on every one of the plurality of the forms 111. Therefore, in a case where the form information items are different, as with "April" and "November" on the form 121 (refer to FIG. 4) and the form 122 (refer to FIG. 6), the position of the check box 424 on the form 121 is different from the position of the check box 431 on the form 122. In the same manner, in a case where the form information items are different, as with "Week 3" and "Week 2" on the form 121 (refer to FIG. 4) and the form 122 (refer to FIG. 6), the position of the check box 413 on the form 121 is different from the position of the check box 412 on the form 122.

Furthermore, in the present embodiment, on the form 111, the check boxes 40 are located in the information correspondence positions that correspond to the form information items that are related to that particular form 111. Moreover, patterns of the same shape as the check boxes 40 are not provided in the information correspondence positions that correspond to the form information items that are different from the form information items that are related to the form 111. For example, as shown in FIG. 4, on the form 121 for the third week of April, the check box 424 is located in the information correspondence position that corresponds to the form information item "April", and the check box 413 is located in the information correspondence position that corresponds to the form information item "Week 3". However, patterns that have the same shape as the check boxes 424, 413 are not provided in the information correspondence positions that correspond to the form information items that are different from the form information items that are related to the form 121 (for example, the information correspondence positions that correspond to the form information item "May" and the form information item "Week 2").

The correspondence data table 95 will be explained with reference to FIG. 8. The correspondence data table 95 is stored in the flash ROM 23. In the correspondence data table 95, the form information items are associated with mark correspondence positions. The form information items indicate "Week 1" to "Week 5" and "January" to "December". The mark correspondence positions are the positions (the coordinates) on the left reading device 26 and the right reading device 27 that correspond to the information correspondence positions where the check boxes 40 are provided. Hereinafter, in a case where the left reading device 26 and the right reading device 27 are referenced collectively, they will be called the reading devices 26, 27.

For example, the coordinates (X17, Y11) to (X18, Y12) of the reading devices 26, 27 are associated with the form information item "April". Note that in FIG. 8, in order to facilitate the explanation, reference numerals 411 to 415 and 421 to 432, which correspond to the check boxes 411 to 415 and 421 to 432 that are shown in FIG. 5, are attached to the check boxes 40 that correspond to the coordinates that indicate the corresponding mark correspondence positions. For example, the coordinates (X17, Y11) to (X18, Y12) that have been entered in the mark correspondence position column correspond to the range from the upper left coordinates (X17, Y11) to the lower right coordinates (X18, Y12) for the check box 424. The entries for the other mark correspondence positions are similar.

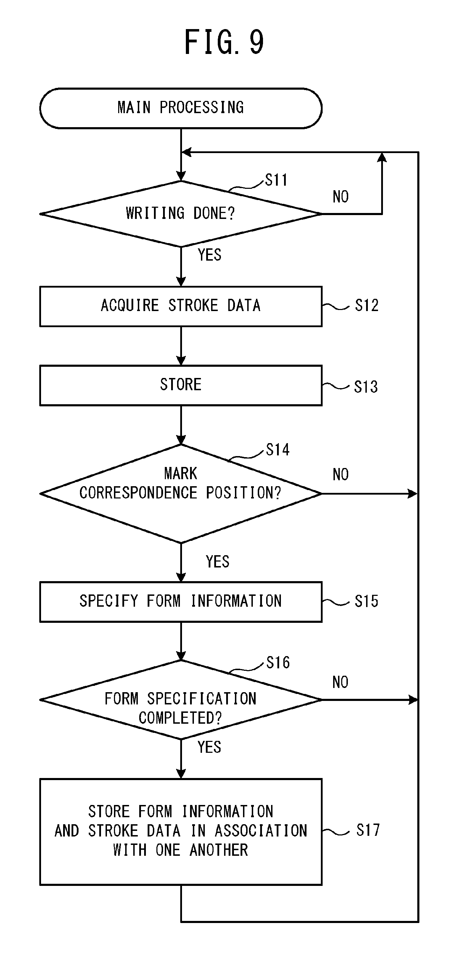

Main processing that is performed by the CPU 21 of the reading device 2 will be explained with reference to FIG. 9. When the power supply to the reading device 2 is turned on, the CPU 21 starts the main processing by operating based on a program that is stored in the flash ROM 23. The CPU 21 determines whether a linear figure has been written in any location by the electronic pen 3 (Step S11). In a case where the CPU 21 determines that a linear figure has not been written (NO at Step S11), the CPU 21 returns to Step S11. In a case where the CPU 21 determines that a linear figure has been written in any location (YES at Step S11), the CPU 21 acquires from the ASIC 281 the stroke data that indicate the position where the writing was done on the form 111 (Step S12). The CPU 21 takes the stroke data that it acquired at Step S12 and stores them in the RAM 22 (Step S 13).

The CPU 21 refers to the correspondence data table 95 (refer to FIG. 8) and determines whether the position that is indicated by the stroke data that were acquired at Step S12 is a mark correspondence position (Step S14). In a case where the CPU 21 determines that the position that is indicated by the stroke data is not a mark correspondence position (NO at Step S14), the CPU 21 returns the processing to Step S11.

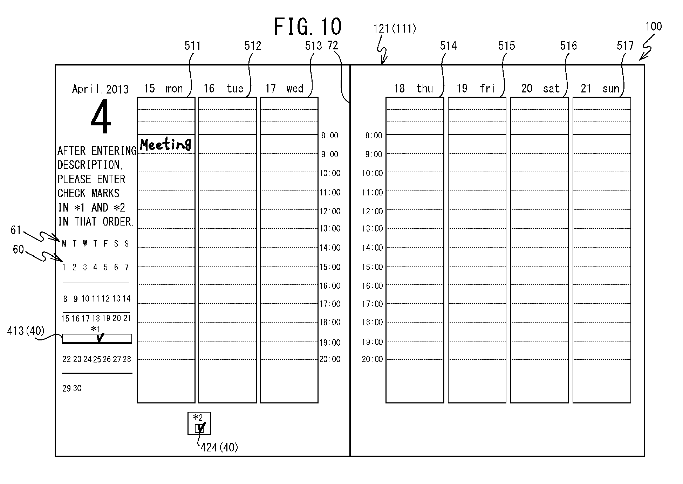

For example, in a case where the user uses the electronic pen 3 to write "Meeting" in the space between "8:00" and "9:00" in the box 511, as in the specific example that is shown in FIG. 10, the processing sequence of YES at Step S11, Step S12, Step S 13, and NO at Step S14 is repeated for as long as "Meeting" is being written. In the same manner, the stroke data for "Meeting" are stored in the RAM 22 (Step S 13).

In a case where the CPU 21 determines that the position that is indicated by the stroke data is a mark correspondence position (YES at Step S14), the CPU 21 refers to the correspondence data table 95 (refer to FIG. 8) and specifies the form information item that is associated with the mark correspondence position (Step S 15). The CPU 21 stores the specified form information item in the RAM 22. The CPU 21 determines whether the specifying of the form 111 has been completed (Step S16). In the case of the specific example that is shown in FIG. 10, the CPU 21 determines that the specifying of the form 111 has been completed when both the month and the week have been specified at Step S 15. In a case where the specifying of the form 111 has not been completed (NO at Step S16), the CPU 21 returns the processing to Step S11. In a case where the specifying of the form 111 has been completed (YES at Step S16), the CPU 21 stores the form information item that was specified at Step S15 in the flash ROM 23 in association with the stroke data that were stored in the RAM 22 at Step S13 (Step S 17).

For example, after writing "Meeting" on the form 121, the user enters check marks in the check box 413 and the check box 424 in that order, as shown in FIG. 10. First, the user uses the electronic pen 3 to enter the check mark in the check box 413. In this case, the position that is indicated by the stroke data that the CPU 21 acquired at Step S12 includes coordinates in the range of (X41, Y45) to (X42, Y46), which is one of the mark correspondence positions in the correspondence data table 95. Accordingly, the CPU 21 determines that the position that is indicated by the stroke data is a mark correspondence position (YES at Step S14). The CPU 21 refers to the correspondence data table 95 and specifies that the form information item that is associated with the mark correspondence position (X41, Y45) to (X42, Y46) is "Week 3" (Step S15). Because the month has not been specified, the CPU 21 determines that the specifying of the form 111 has not been completed (NO at Step S16).

Next, the user uses the electronic pen 3 to enter the check mark in the check box 424. In this case, the position that is indicated by the stroke data that the CPU 21 acquired at Step S12 includes coordinates in the range of (X17, Y11) to (X18, Y12), which is one of the mark correspondence positions in the correspondence data table 95. Accordingly, the CPU 21 determines that the position that is indicated by the stroke data is a mark correspondence position (YES at Step S14). The CPU 21 refers to the correspondence data table 95 and specifies that the form information item that is associated with the mark correspondence position (X17, Y11) to (X18, Y12) is "April" (Step S15). Because the form information items have been specified for both the month and the week, the CPU 21 determines that the specifying of the form 111 has been completed (YES at Step S16). The CPU 21 takes "April" and "Week 3", which are the form information items that were specified at Step S 15, and stores them in the flash ROM 23 in association with the stroke data that were stored in the RAM 22 at Step S13. Note that it is acceptable for the stroke data for the check marks that were entered in the check boxes 413, 424 not to be stored in the flash ROM 23. Next, the CPU 21 returns the processing to Step S11. Note that the main processing is terminated when the power supply to the reading device 2 is turned off.

As described previously, the CPU 41 of the PC 19 is able to acquire the stroke data from the reading device 2 by near field communication and to store the stroke data in one of the RAM 43 and the HDD 42. At this time, the CPU 41 acquires and stores the stroke data and the form information items that were stored at Step S17. The CPU 41 is also able to specify the character string by performing the OCR processing on the acquired stroke data.

Furthermore, the form information items and the format image that will be displayed are stored in association with one another in the HDD 42. The CPU 41 is able to create the image file by combining the format image that corresponds to the form information items with one of the linear figure that is based on the stroke data and the character string that has been subjected to the OCR processing. The image may be a vector image or a raster image, for example. The image file may be a JPEG file, a GIF file, a PNG file, or a BMP file, for example.

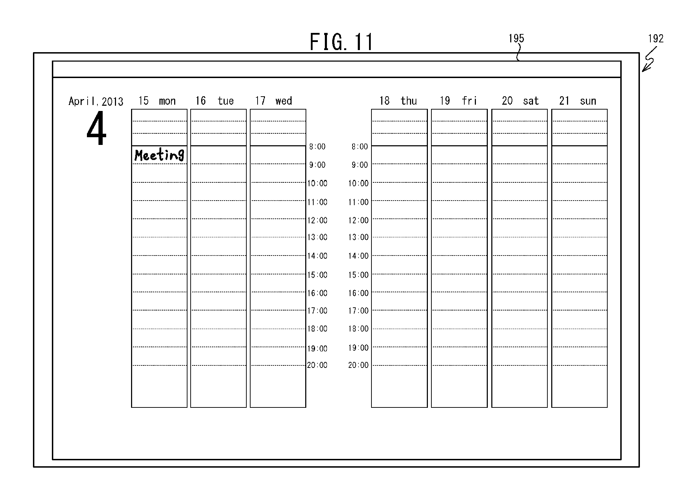

For example, as shown in FIG. 11, the CPU 41 of the PC 19, based on the created image file, displays on the display 192 the linear figure "Meeting" that is based on the stroke data and on a format image 195 that is associated with the form information items "April" and "Week 3". In the example that is shown in FIG. 11, things such as the check boxes 413, 424 and the check marks that were entered in the check boxes 413, 424 are not displayed, but the check boxes 413, 424 may also be displayed.

Note that the CPU 21 of the reading device 2 may also specify the character string by performing the OCR processing on the stroke data. The format image that will be displayed may also be stored in association with the form information items in the flash ROM 23 of the reading device 2. It is also acceptable for the CPU 21 of the reading device 2 to be able to create the image file by combining the format image that corresponds to the form information items with one of the linear figure that is based on the stroke data and the character string that has been subjected to the OCR processing. The CPU 21 may also transmit the created image file to the PC 19.

Note that in a case where the user, after entering "Meeting" and entering the check marks in the check boxes 413, 424, does additional writing on the form 121 and again enters the check marks in the check boxes 413, 424, the content that has been written on the form 121 in addition to "Meeting" will also be stored (Step S17).

The paper medium 100 in the present embodiment is formed as described above and is processed by the reading device 2. In the present embodiment, the check boxes 40 are positioned in the information correspondence positions, which are the specified positions that correspond to the form information items. That is, the form information items are displayed by the check boxes 40 that are provided in the specified positions. For example, in the example that is shown in FIG. 4, the form information items "April" and "Week 3" are displayed by the positions of the check boxes 424 and 413, respectively. The user memorizes in advance the relationship between the positions of the check boxes 424 and 413 and the form information items "April" and "Week 3" that are respectively displayed in them. Just by looking at the positions of the check boxes 424 and 413, the user is able to recognize that the form 121 is the form 111 for the third week of April.

Furthermore, in a case where the form information items are the same on every one of a plurality of the forms 111, the information correspondence positions are the same positions on every one of the plurality of the forms 111. In a case where the form information items are different on every one of a plurality of the forms 111, the information correspondence positions are different on every one of the plurality of the forms 111. Therefore, if the user memorizes the positions of the check boxes 40 that correspond to the form information items, for example, the user will be able to recognize the form information items for the form 111 just by looking at the positions of the check boxes 40. For example, if the user memorizes the position of the check box 424 that corresponds to the form information item "April", the user will be able to recognize the form information item "April" on both the form 121 and the form 123 (refer to FIGS. 4 and 7) just by looking at the check box 424 that is in that position on the forms 121 and 123. In the same manner, if the user memorizes the position of the check box 412 that corresponds to the form information item "Week 2", the user will be able to recognize the form information item "Week 2" on both the form 122 and the form 123 (refer to FIGS. 6 and 7) just by looking at the check box 412 that is in that position on the forms 122 and 123. Accordingly, the number of the positions of the check boxes 40 that the user needs to remember for the form 111 that is described above can be reduced from what it would be in a case where, even though the form information items are the same on every one of a plurality of the forms 111, the positions of the check boxes 40 are different on every one of the plurality of the forms 111, that is, a case where the check box 40 that corresponds to a particular form information item is provided in a plurality of different positions. Accordingly, the burden on the user of memorizing the positions of the check boxes 40 can be reduced.

Moreover, in a case where the form information items are the same on every one of a plurality of the forms 111, the information correspondence positions are the same positions on every one of the plurality of the forms 111, so there is only one mark correspondence position that corresponds to any one form information item. Accordingly, the amount of storage capacity that is used to store the mark correspondence positions in the flash ROM 23 can be reduced from what it would be in a case where a plurality of the mark correspondence positions are stored in correspondence to a single form information item.

To take another example, on the form 121, the check boxes 413, 424 are located in the information correspondence positions that respectively correspond to the form information item "Week 3" and the form information item "April" that are related to the form 121. Conversely, patterns of the same shape as the check boxes 413, 424 are not provided in the information correspondence positions that correspond to the form information items (hereinafter called the other form information items) that are different from the form information items that are related to the form 121. For example, on the form 121, patterns of the same shape as the check boxes 413, 424 are not provided in the information correspondence position (the position of the check box 425 in FIG. 5) that corresponds to the form information item "May", which is different from the form information item "April". Accordingly, the possibility that the user will recognize the form information item incorrectly can be reduced from what it would be in a case where patterns that have the same shape as the check boxes 413, 424 are provided in the information correspondence positions that correspond to the other form information items. The possibility that the user will mistakenly enter a check mark at an information correspondence position that corresponds to one of the other form information items can also be reduced.

Furthermore, what are provided in the specified positions that correspond to the form information items are the check boxes 40. The check boxes 40 prompt the user to enter the check marks. Therefore, the check boxes 40 draw the user's attention more readily than would happen in a case where dots (•) or the like, for example, are provided instead of the check boxes 40 in the specified positions that correspond to the form information items. Accordingly, the user can quickly confirm the positions of the check boxes 40. The user is therefore able to recognize the form information items efficiently, based on the positions of the check boxes 40.

Note also that the shapes of the marks that are provided in the specified positions that correspond to the form information items are the check boxes. Therefore, if the user enters a check mark in one of the check boxes 40, the user can easily determine that he has caused the reading device 2 to specify the form information item. It is therefore possible to prevent a situation in which the reading device 2 does not specify the form information item because the user forgot to enter the check mark.

If the user enters the check marks in the check boxes 413, 424, the form information items and the stroke data are automatically stored in association with one another (Step S17 in FIG. 9). It is therefore not necessary to provide a check box in addition to the check boxes 413, 424 in order to cause the CPU 21 to recognize a command to store the form information items and the stroke data in association with one another. It is therefore possible to reduce the space where the check boxes are located from what it would be in a case where a check box is provided for causing the CPU 21 to recognize a command to store the form information items and the stroke data in association with one another.

In the embodiment that is described above, the check box 40 is an example of a mark of the present invention. The left reading device 26 and the right reading device 27 are examples of placement means of the present invention. The sensor circuit boards 8, 9 are examples of detection means of the present invention. The electronic pen 3 is an example of writing means of the present invention. The correspondence data table 95 is an example of correspondence information of the present invention. The flash ROM 23 is an example of storage means of the present invention. The CPU 21 that performs the processing at Step S12 in FIG. 9 is an example of position acquisition means of the present invention. The CPU 21 that performs the processing at Step S 15 in FIG. 9 is an example of specification means of the present invention. The reading device 2 is an example of an input device of the present invention.

Note that that present embodiment is not limited to the in the embodiment that is described above, and a modification of the sort described below can be made. For example, the ranges of the mark correspondence positions in the correspondence data table 95 (refer to FIG. 8) may be ranges that are larger than the outlines of the check boxes 40.

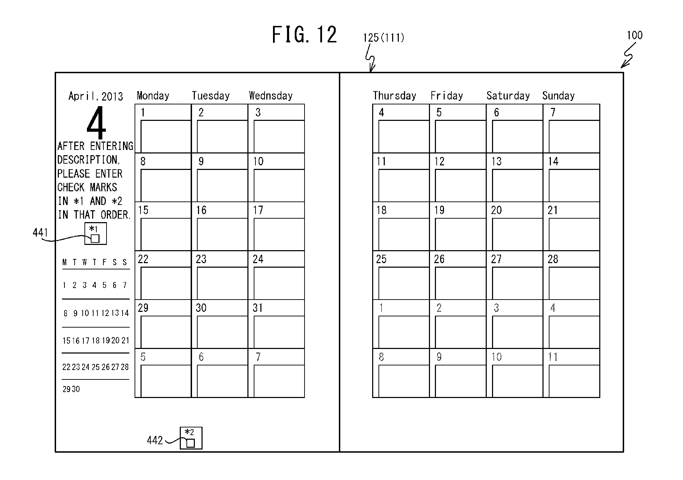

The one-week format is also just one example, and the form 111 may also have a format for writing plans by the month. For example, the form 111 may have the format for the month of April, 2013 that is shown in FIG. 12. In this case, the position of a check box 441 may indicate the form information item "April", and the position of a check box 442 may indicate the form information item "2013". Note that the position of the check box 441 that indicates the form information item "April" may also be the same as the position of the check box 424 in FIG. 4.

Instead of having a format for writing plans, the form 111 may have a format for writing memos, for example. The check box 40 may also be provided in a specified position that indicates a page number, without being limited to any one format. In that case, the form information item would be the page number.

The order in which the check marks are entered in the check boxes 413, 424 is not limited, and the check marks may also be entered in the check box 424 and the check box 413 in that order, for example. It is also acceptable for "*1" and "*2" not to be provided on the form 111. The dates "15" to "21" are provided above the check box 413, but it is also acceptable for them not to be provided on the form 111. It is also acceptable for other dates not to be provided on the form 111.

The main processing (refer to FIG. 9) may also be performed by the CPU 41 of the PC 19, instead of by the CPU 21 of the reading device 2. In that case, the correspondence data table 95 and the program for performing the main processing may be stored in the HDD 42 of the PC 19. In that case, the reading device 2 would transmit the stroke data to the CPU 41 of the PC 19. Having received the stroke data, the CPU 41 would perform the main processing in FIG. 9 using the received stroke data. The CPU 41 would store the stroke data in the RAM 43 at Step S13. At Step S 17, the CPU 41 would store the stroke data and the form information items in association with one another in the HDD 42. In the present modified example, the PC 19 is an example of the input device of the present invention. The HDD 42 is an example of the storage means of the present invention. The CPU 41 that performs the processing at Step S12 in FIG. 9 is an example of the position acquisition means of the present invention. The CPU 41 that performs the processing at Step S15 in FIG. 9 is an example of the specification means of the present invention.

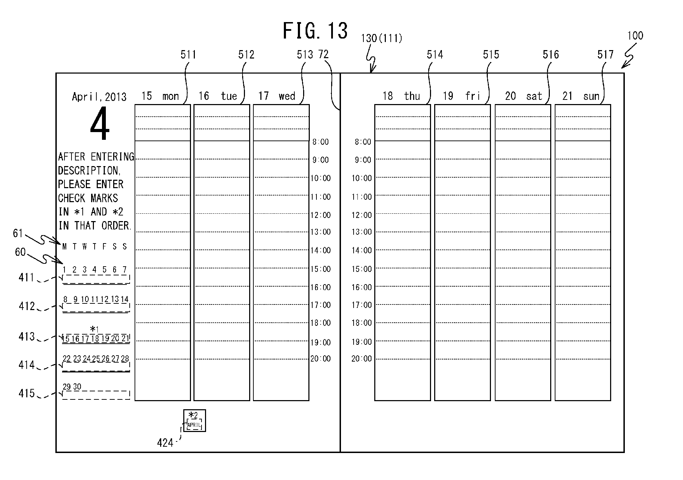

What is provided in correspondence to the form information item is the check box 40, but another mark, such as a dot (•), a circle (○), or the like, for example, may also be provided. The mark may also be character string (one or more text characters, numeric characters, pictorial figures, and the like) that indicates content that is related to the form information item. Hereinafter, an example of a case in which the mark that is provided in the information correspondence position is a character string that indicates content that is related to the form information item will be explained. Note that the check boxes 424 and 411 to 415 are not provided on a form 130 that is shown in FIG. 13, but for the purpose of this explanation, dotted outlines are shown in the same positions as the check boxes 424 and 411 to 415 that are shown in FIG. 5. Furthermore, the range of the check box 424 is larger than the example that is shown in FIG. 5. In this case, the range of the coordinates of the mark correspondence position for the check box 424 is also larger in the correspondence data table.

Unlike on the form 121 (refer to FIG. 4), the check boxes 413, 424 are not provided on the form 130 that is shown in FIG. 13. However, the character string "April", which is the content that is related to the form information item "April", is provided in the same position as the check box 424. In addition, the third week date character strings "15" to "21", which are the content that is related to the form information item "Week 3", are provided in the same position as the check box 413. Furthermore, in the present modified example, the character string "April" and the character strings "15" to "21" are provided in the information correspondence positions on the form 130 that correspond to the form information item "April" and the form information item "Week 3" that are related to the form 130. In addition, patterns that have the same shape as the date character strings are not provided in the information correspondence positions that correspond to the form information items that are different from the form information items that are related to the form 130 (the same positions as the positions of the check boxes 411, 412, 414, 415 in FIG. 13).

When the user enters a check mark on any one of the character strings "15" to "21" for the third week of April, the CPU 21 specifies the form information item "Week 3" (refer to Step S15 in FIG. 9). When the user enters a check mark on the character string "April", the CPU 21 specifies the form information item "April" (refer to Step S 15 in FIG. 9).

In the present modified example, the mark that corresponds to a form information item is itself a character string that indicates the content that is related to the form information item, so the user is easily able to recognize the form information item "April" and the form information item "Week 3". The user is also able to specify a form information item on the reading device 2 simply by entering a check mark on the character string that indicates the content that is related to the form information item.

To take another example, in a case where the character string "April" is added below the check box 424 in FIG. 4, it is necessary to position the check box 424 and the character string "April" such that they are aligned with one another, so cases will occur in which the space for arranging them becomes larger, and the area where the user can write freely becomes smaller. However, in a case where a mark that is located in an information correspondence position is a character string that indicates content that is related to a form information item, as in the modified example, it is not necessary to position the character string and the check box 40 such that they are aligned with one another, so the space for arranging them can become smaller. Accordingly, the space where the user can perform writing freely can be made larger. Note that the content that is related to the form information item "Week 3" is the set of the date character strings for the third week, but another character string, such as the character string "Week 3" or the like, may also be provided.

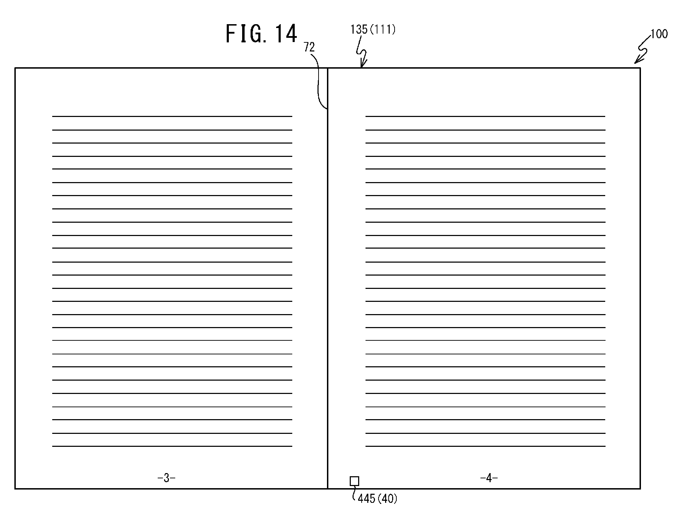

An example of another format will be explained. A form 135 that is shown in FIG. 14 has a notebook format. The form 135 has two facing pages, the left page being page 3, and the right page being page 4. A check box 445 is provided in the lower left portion of page 4, which is one of the two facing pages of the form 135. The position of the check box 445 indicates the form information item "Page 3, Page 4". Form information items "Page 1, Page 2", "Page 3, Page 4", "Page 5, Page 6", and the like are stored in the flash ROM 23 in association with corresponding mark correspondence positions, in the same manner as in the correspondence data table 95 that is shown in FIG. 8. The user writes a linear figure on the form 135 and enters a check mark in the check box 445. In this case, the CPU 21 specifies the form information item "Page 3, Page 4" (Step S15) and stores the form information item "Page 3, Page 4" and the stroke data in the flash ROM 23 (Step S17). In other words, the CPU 21 is able to handle the format of the two facing pages as a one-page format.

In the present modified example, the form information item for the two facing pages (for example, "Page 3, Page 4") is shown in the position of one check box 40. Therefore, the number of the positions of the check boxes 40 that the user is required to remember is less than the number of pages in the paper medium 100. Accordingly, the burden on the user of memorizing the positions of the check boxes 40 can be reduced. Furthermore, because the number of the positions of the check boxes 40 is less than the number of pages in the paper medium 100, the space that is required for arranging the check boxes 40 can be reduced. Accordingly, the space where the user can write freely can be made larger, for example.

Furthermore, the form information item for the two facing pages corresponds to a single mark correspondence position. Therefore, the amount of storage capacity that is used to store the mark correspondence positions in the flash ROM 23 can be reduced from what it would be in a case where separate mark correspondence positions are provided for a left page form information item and a right page form information item.

To take another example, in a case where the user enters a check mark in the check box 445 that is located on Page 4, which is one of the two pages, the CPU 21 stores in the flash ROM 23 the stroke data that have been written on the two facing pages. Accordingly, the user's effort is less than it would be in a case where check boxes 40 are provided on both the left page and the right page and the check marks have to be entered on the individual pages.

Note that even in a case where the paper medium 100 has been changed to a different paper medium, for example, the position of the check box 445 that corresponds to the form information item "Page 3, Page 4" is still the same. Accordingly, even in a case where the form has been changed by the changing of the paper medium 100, if the user memorizes the position of the check box 445 that corresponds to the form information item "Page 3, Page 4", for example, the user will be able to recognize the form information item "Page 3, Page 4" by recognizing the position of the check box 445.

By operating the input portion 191 of the PC 19, for example, the user may also cause the CPU 21 to recognize that the paper medium 100 has been changed to a different paper medium. In that case, the CPU 21 may store the stroke data separately for page 3 and page 4 of the paper medium 100 before the change and page 3 and page 4 of the paper medium 100 after the change.

## Claims

1. An input device (2), comprising:
position acquisition means (21) for acquiring a position where writing has been performed on a form (111) by writing means (3),
the position having been detected by detection means (8, 9) that is provided in placement means (26, 27) on which is placed a paper medium (100) comprising: a form (111) ; and a mark (40) that is disposed on the form (111) in an information correspondence position, the information correspondence position being a specified position that corresponds to a form information item, the information correspondence position being the same position on each one of a plurality of forms (111) in a case where the form information item is the same on each one of the plurality of the forms (111), the information correspondence position being a different position on each one of a plurality of the forms (111) in a case where the form information item is different on each one of the plurality of the forms (111), and the form information item being specified information that is related to the form (111);
storage means (23) for storing correspondence information (95) that is information in which a form information item is associated with a mark correspondence position, the mark correspondence position being a position on the placement means (26, 27) that corresponds to the information correspondence position; and
specification means (21) for specifying the form information item that is associated with the mark correspondence position, by referring to the correspondence information (95) that is stored in the storage means (23), in a case where the position that has been detected by the detection means (8, 9) is the mark correspondence position.

2. The input device (2) according to claim 1, wherein
the mark (40) is disposed on the form (111) in the information correspondence position that corresponds to the form information item that is related to the form (111), and
no pattern that has a same shape as the mark (40) is disposed in another information correspondence position that corresponds to another form information item that is different from the form information item.

3. The input device (2) according to either one of claims 1 and 2, wherein
the mark (40) is a check box (40).

4. The input device (2) according to either one of claims 1 and 2, wherein
the mark (40) is a character string that indicates content that is related to the form information item.

5. The input device (2) according to any one of claims 1 to 4, wherein
the form (111) includes two facing pages, and
the mark (40) that is disposed in the information correspondence position for the form (111) that includes the two facing pages is disposed on one of the pages of the form (111) that includes the two facing pages.

6. A non-transitory computer-readable medium that stores a control program that is executable on an input device, the program including computer-readable instructions that, when executed, cause the input device to perform the steps of:
acquiring a position where writing has been performed on a form (111) by writing means (3),
the position having been detected by detection means (8, 9),
the detection means (8, 9) being provided in placement means (26, 27) on which a paper medium (100) is placed,
the paper medium (100) including the form (111) and a mark (40) that is disposed on the form in an information correspondence position,
the information correspondence position being a specified position that corresponds to a form information item,
the information correspondence position being the same position on each one of a plurality of the forms (111) in a case where the form information item is the same on each one of the plurality of the forms (111),
the information correspondence position being a different position on each one of a plurality of the forms (111) in a case where the form information item is different on each one of the plurality of the forms (111),
the form information item being specified information that is related to the form (111), and
the writing means (3) being an instrument that performs writing on the form (111); and
specifying, by referring to correspondence information (95), in a case where the detected position is a mark correspondence position, the form information item that is associated with the mark correspondence position, the correspondence information (95) being information in which the form information item is associated with the mark correspondence position, and the mark correspondence position being a position on the placement means (26, 27) that corresponds to the information correspondence position.

7. A paper medium (100) by comprising:
a form (111) ; and
a mark (40) that is disposed on the form (111) in an information correspondence position,
the information correspondence position being a specified position that corresponds to a form information item,
the information correspondence position being the same position on each one of a plurality of forms (111) in a case where the form information item is the same on each one of the plurality of the forms (111),
the information correspondence position being a different position on each one of a plurality of the forms (111) in a case where the form information item is different on each one of the plurality of the forms (111), and
the form information item being specified information that is related to the form (111).

8. The paper medium (100) according to claim 7, wherein
the mark (40) is disposed on the form (111) in the information correspondence position that corresponds to the form information item that is related to the form (111), and
no pattern that has a same shape as the mark (40) is disposed in another information correspondence position that corresponds to another form information item that is different from the form information item.

9. The paper medium according to either one of claims 7 and 8, wherein
the mark (40) is a check box (40).

10. The paper medium according to either one of claims 7 and 8, wherein
the mark (40) is a character string that indicates content that is related to the form information item.

11. The paper medium according to any one of claims 7 to 10, wherein
the form (111) includes two facing pages, and
the mark (40) that is disposed in the information correspondence position for the form (111) that includes the two facing pages is disposed on one of the pages of the form (111) that includes the two facing pages.
